# EUROPÄISCHE PATENTSCHRIFT

(11) **EP 0 857 597 B1**
(45) Veröffentlichungstag und Bekanntmachung des Hinweises auf die Patenterteilung: **31.10.2001**
(21) Anmeldenummer: 98101421.0
(22) Anmeldetag: 28.01.1998
(51) Int. Cl.: B60J 7/14, B60J 7/20

(54) **Kraftwagen mit einem zu öffnenden Verdeck**
Motorvehicle provided wirth an openable top
Véhicule automobile avec toit ouvrable

(30) Priorität: 07.02.1997 DE 19704570
(43) Veröffentlichungstag der Anmeldung: 12.08.1998
(73) Patentinhaber: DaimlerChrysler AG, 70567 Stuttgart (DE)
(72) Erfinder: Bruhnke, Ulrich, 71139 Ehningen (DE)

(56) Entgegenhaltungen:
- DE-C- 4 438 190
- FR-A- 2 699 868
- GB-A- 379 144

## Beschreibung

Die Erfindung betrifft einen Kraftwagen mit einem zu öffnenden Verdeck der im Oberbegriff des Hauptanspruches angegebenen Art.

Ein ähnlicher Kraftwagen ist aus der DE 1555155 B2 bereits als bekannt zu entnehmen, wobei der einen Überrollbügel bildende Dachabschnitt ein abnehmbarer Dachaufsatz ist. Dieser Dachaufsatz ist in seiner montierten Stellung relativunbeweglich mit der Karosserie verbunden und stützt das zu öffnende Verdeck. Bei einer Ausführungsform befindet sich hinter dem montierten Dachaufsatz ein schräg nach hinten abfallender Dachbereich, durch den der Dachaufsatz an seiner Rückseite geschlossen ist. Durch den montierten Dachaufsatz samt dem dahinterliegenden Dachbereich wird der Innenraum des Kraftwagens bei geöffnetem Dach somit, ähnlich wie bei Targa-Fahrzeugen bekannter Art, weitgehend gegen Rückströmungen des Fahrtwindes abgeschirmt.

Bei den beschriebenen Ausführungsformen des bekannten Kraftwagens lassen sich der Dachaufsatz mit daran befestigtem Verdeck oder das vom Dachaufsatz abgenommene Verdeck und ggf. zusätzlich der Dachaufsatz im Kofferraum des Kraftwagens verstauen. Bereits aufgrund des Platzbedarfs des Verdecks im Kofferraum wird dessen Nutzbarkeit erheblich beeinträchtigt. Soll zudem noch der Dachaufsatz im Kofferraum mitverstaut werden, dürfte kaum noch ein zum Transport von Gepäck ausreichender Restkofferraum zur Verfügung stehen.

Die Dachkonstruktion des bekannten Kraftwagens mit Stufenheck ist für kompakte Kraftwagen mit raumsparendem Maßkonzept und entsprechend geringer Kofferraumerstreckung demnach wenig geeignet. Darüber hinaus kann die Bedienung der Dachkonstruktion beim Abnehmen und Verstauen des Verdecks problematisch sein, da die Bedienperson hierzu über Kraft und Geschicklichkeit verfügen muß.

Ferner ist aus der DE-PS 287068 ein Kraftwagen mit Klappverdeck bekannt, bei dem das Verdeck im geöffneten Zustand kompakt zusammengeklappt in einem Stauraum des Wagenkastens versenkt ist, der in einer steil geneigten, annähernd senkrechten Fahrzeugquerebene des Kraftwagens liegt. Hierbei ist die Rückenlehne einer Rücksitzbank in vorteilhafter Weise als Verdeckkastendeckel mitgenutzt und läßt sich zum Öffnen des Verdeckkastens um eine entlang der unteren Randseite verlaufende Achse nach vorn klappen. Da sich der Stauraum unmittelbar am rückwärtigen Abschluß des Wagenkastens befindet, ließe sich bei diesem Fahrzeugkonzept somit nicht ohne weiteres ein von hinten zugänglicher Kofferraum vorsehen.

Außerdem ist aus der gattungsgemäßen FR-A-2 699 868 ein Kraftwagen mit einem zu öffnenden Verdeck bekannt, das im geschlossenen Zustand den Innenraum des Kraftwagens zwischen einer vorderen Windschutzscheibe und einem hinteren, mit seitlichen Säulen ein Heckdachteil bildenden Dachabschnitt überdeckt, wobei der Innenraum des Kraftwagens bei geöffnetem Verdeck durch den Dachabschnitt weitgehend vor Rückströmungen des Fahrtwindes abgeschirmt ist. Bei geöffnetem Verdeck sind die beiden Dachplatten des Verdecks raumsparend aufeinandergeklappt in einer steil geneigten Fahrzeugquerebene der Karosserie hinter dem Fahrgastabschnitt des Innenraums und in einem Abstand vor einer Rückwand des Fahrzeughecks gehalten.
Damit sich das Verdeck zum Versenken in den Heckstauraum herunterklappen läßt, muß das Heckdachteil vorher in eine Freigabestellung nach hinten hochgeschwenkt werden. Mit einem unbeweglich angeordneten Dachabschnitt, wie er zum wirkungsvollen Überrollschutz wünschenswert ist, wäre der Versenkvorgang des Verdeckes demnach nicht mehr ohne weiteres möglich.

Die Beladungsmöglichkeiten des Heckstauraums sind bei dem bekannten Kraftwagen auch durch den relativ kleinen Kofferraumdeckel begrenzt, dessen maximale Abmessungen durch die niedrige Rückwand unterhalb des Dachabschnitts vorgegeben sind. Eine entsprechend größere Rahmenöffnung mit großformatiger Rückwandtür, wie bei Kraftwagen mit Steilheck üblich, ließe sich bei dem bekannten Kraftwagen nicht problemlos realisieren

Des weiteren sind aus dem Serienfahrzeugbau kompakte Kraftwagen mit Steilheck und einem zu öffnenden Roll- oder Lamellendach bekannt, wozu aus dem Dachblech des Kraftwagens eine angepaßte Dachöffnung ausgespart wird. Da das aufgerollte bzw. zusammengeschobene Verdeck bei diesen Kraftwagen im hinteren Bereich der Dachöffnung verbleibt, ist zur Unterbringung des geöffneten Verdecks kein Verdeckkasten bzw. Stauraum im Wagenkasten erforderlich. Jedoch bleibt das Verdeck im geöffneten Zustand von außen sichtbar und die freizulegende Dachöffnung ist verhältnismäßig klein. Diese bekannten Kraftwagen weisen an sich einen geschlossenen Dachaufbau mit unbeweglichen seitlichen Dachrahmen auf. Somit gehören sie nicht zur Kategorie der Cabriolets oder Targa-Fahrzeuge, deren Dach sich zum Offenfahren durch Absenken der rahmenlosen Seitenscheiben bis zu den seitlichen Bordwänden öffnen läßt.

Der Erfindung liegt die Aufgabe zugrunde, ein Kraftwagenkonzept der gattungsgemäßen Art dahingehend weiterzuentwickeln, daß bei Aufrechterhaltung der freizügigen Öffnungsmöglichkeit und Abschirmung gegen Rückströmungen des Fahrtwindes ein Kompaktfahrzeug geschaffen werden kann, das im Innenraum eine gute Bauraumausnutzung zuläßt, trotz weitgehender Versenkbarkeit des Verdecks hinreichend Platz für einen Kofferraum bieten kann und auch zur Beladung mit sperrigen Ladegütern geeignet ist.

Die erfindungsgemäße Lösung dieser Aufgabe ergibt sich aus den Merkmalen des Hauptanspruchs.

Vorteilhafte Ausgestaltungen der Erfindung sind den übrigen Ansprüchen zu entnehmen.

Durch das Vorhandensein des als Überrollbügel dienenden Dachabschnittes vor der steilen Rückwand des Kraftwagens in Verbindung mit dem Rahmen der Windschutzscheibe läßt sich eine ausreichende passive Sicherheit für Fahrzeuginsassen bei einem Überschlag des Fahrzeugs erzielen.

Der gebotene Schutz der Insassen bei Überschlägen bleibt selbst dann erhalten, wenn die vordere Stirnseite des im Querschnitt U-förmigen Dachabschnitts schräg nach hinten geneigt ist. Diese Gestaltung ist vorteilhaft, weil der subjektiv von den Insassen wahrgenommene Öffnungsgrad bei versenktem Dach dem von Cabriolets mit vollständig versenkbarem Dach nahekommt und jedenfalls deutlich über den Öffnungsgrad eines Targa-Fahrzeugs hinausgeht.

Trotz des großzügigen Öffnungszustandes können die Neigung und Krümmung der Windschutzscheibe, der Abstand der Hinterkante ihres Rahmens zum Dachabschnitt, eine Verjüngung des Kraftwagenquerschnitts vom Anordnungsbereich der Windschutzscheibe zum Anordnungsbereich des Dachabschnittes und die Höhe bzw. der Verlauf der Bordwandoberkanten so aufeinander abgestimmt werden, daß der Innenraum bei geöffnetem Dach weitgehend gegen Rückströmungen des Fahrtwindes abgeschirmt bleibt. Dies gilt selbst für die hinteren Sitzplätze bei einem viersitzigen Cabriolet.

Da das geöffnete Verdeck in Steillage hinter dem Fondbereich des Fahrgastraumes abgesenkt ist, verbleibt hinter diesem und vor der steilen Rückwand noch Platz für einen ausreichend großen Kofferraum. Aufgrund dieser Steillage des abgesenkten Verdecks wird zudem die lichte Höhe des Kofferraums nicht verringert.

In Ausgestaltung der Erfindung ist die bewegliche Dachkonstruktion als Faltverdeckanordnung gestaltet, die ein zusammenklappbares Verdeckgestell als tragende Struktur und einen das Verdeckgestell überspannenden Verdeckbezug aufweist.

Um eine zuverlässige Abdichtung des Verdecks gegenüber der Karosserie zu erleichtern, ist das Verdeckgestell entlang seinen Umfangsseiten aus stabilen Rahmenträgern sowie aus einem die Rahmenträger zwischen der zusammengeklappten und der aufgespannten Endposition steuernden Gelenkmechanismus aus Stangen und Gelenken zusammengesetzt, wobei das gesamte Verdeckgestell über den Gelenkmechanismus am Dachabschnitt angelenkt ist. Der Gelenkmechanismus weist einen bezogen auf die Längsmittelebene spiegelsymmetrischen Aufbau auf, wie dies bei bekannten Faltverdeckkonstruktionen üblich ist. Durch die Anlenkung des Verdecks am Dachabschnitt in einem Höhenabstand oberhalb der Bordwandoberkanten läßt sich das Faltverdeck in technisch einfacher Weise entlang einer Kreisbahn in seine abgesenkte Ablagestellung klappen. Darüber hinaus können die Anlenkpunkte oberhalb des abgesenkten Verdecks an den seitlichen Säulen des Dachabschnitts vorgesehen werden und das Verdeck nach vorn unten herunterzuklappen sein. Infolgedessen wird das mögliche Kofferraumvolumen nicht durch den Platzbedarf des Verdecks während seiner Verlagerung reduziert.

Damit die Querschnittsgestaltung des Verdecks am hinteren Abschluß problemlos an die vordere Stirnseite des bügelförmigen Dachabschnitts angepaßt werden kann, ohne das vollständige Herunterklappen des Verdecks in seine Ablagestellung zu beeinträchtigen, läßt sich die Querschnittserstreckung des Faltverdecks für den Versenkvorgang verringern und beim Schließen des Verdecks wieder vergrößern.
Den C-Säulenabschnitte bildenden Rahmenträgern sowie einem den rückwärtigen Abschluß des Verdecks bildenden Spannbügel kann hierzu eine Einzugsanordnung zum kompakten Zusammenziehen der C-Säulenrahmen und des Spannbügels zugeordnet werden. Diese Einzugsanordnung wird vorzugsweise beim Zusammenlegen des Faltverdeckes selbsttätig wirksam und führt zu noch kompakteren Breitenabmessungen des zusammengelegten Faltverdeckes.

Vorzugsweise ist das Verdeckgestell mittels des Gelenkmechanismus derart absenkgeführt, daß das Verdeck in seiner geöffneten Endposition - auf eine Flucht in Fahrzeuglängsrichtung bezogen - im wesentlichen vollständig hinter eine Sitzlehnenanordnung des Fondsitzbereiches gehalten ist. Da das Faltverdeck nur seitlich an den Säulen des Dachabschnitts aufgehängt ist, bleibt bei geöffnetem Verdeck eine freie Sicht durch den Dachabschnitt nach hinten erhalten.

In alternativer Ausgestaltung der Erfindung ist die bewegliche Dachkonstruktion aus wenigstens zwei formsteifen Dachschalen aufgebaut, die für ein Absenken in die geöffnete Position in eine einander parallel überlagernde Stellung überführbar sind.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform eines erfindungsgemäßen Personenkraftwagens mit einem vollständig geschlossenen Faltverdeck in Seitenansicht,
- Fig. 2: den Personenkraftwagen nach Fig. 1 mit einer schematischen Darstellung seitlicher Rahmenträger der Faltverdeckanordnung nach einer ersten Öffnungbewegungsphase,
- Fig. 3: die Rahmen der Faltverdeckanordnung entsprechend Fig.2 vor einer letzten Öffnungsbewegungsphase,
- Fig. 4: die Rahmen der Faltverdeckanordnung nach den Fig. 1 bis 3 bei vollständig versenktem Verdeck,
- Fig. 5: einen Mittellängsschnitt durch das Verdeckgestell in einer geschlossenen Stellung des Verdecks gemäß Fig. 1,
- Fig. 6: den Mittellängsschnitt durch das Verdeckgestell in einer etwa Fig. 2 entsprechenden Öffnungsstellung,
- Fig. 7: den Mittellängsschnitt durch das Verdeckgestell in einer etwa Fig. 3 entsprechenden Öffnungsstellung,
- Fig. 8: den Mittellängsschnitt durch das Verdeckgestell in einer weiteren Zwischenstellung in Öffnungsrichtung,
- Fig. 9: den Mittellängsschnitt durch das Verdeckgestell bei gemäß Fig. 4 vollständig geöffnetem Verdeck,
- Fig. 10: eine Draufsicht auf das Verdeckgestell bei vollständig geschlossenem Verdeck,
- Fig. 11: eine schematische Darstellung des Personenkraftwagens in Seitenansicht mit einem alternativ vorgesehenen zweiteiligen Schiebeverdeck im geschlossenen Zustand,
- Fig. 12: den Personenkraftwagen nach Fig.11 mit nach einer ersten Öffnungsbewegungsphase übereinandergeschobenen Dachschalen,
- Fig. 13: den Personenkraftwagen nach Fig.11 mit nach einer weiteren Öffnungsbewegungsphase teilweise heruntergeklapptem Dachschalenpaket, und
- Fig. 14: den Personenkraftwagen nach Fig. 11 bei vollständig geöffnetem und verstautem Schiebeverdeck.

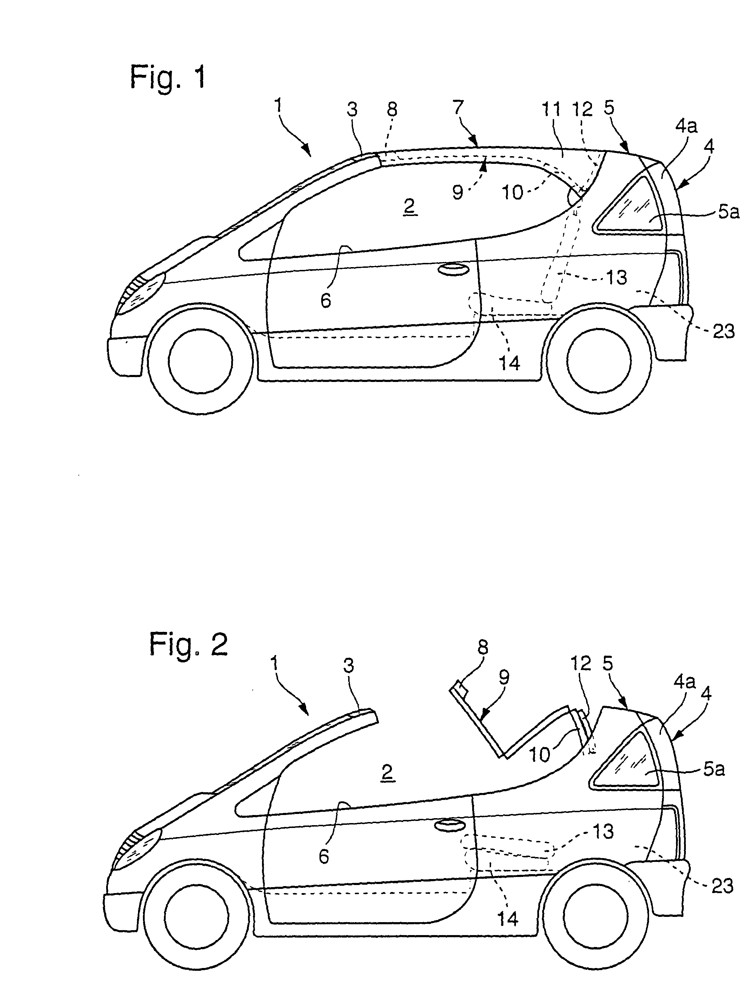

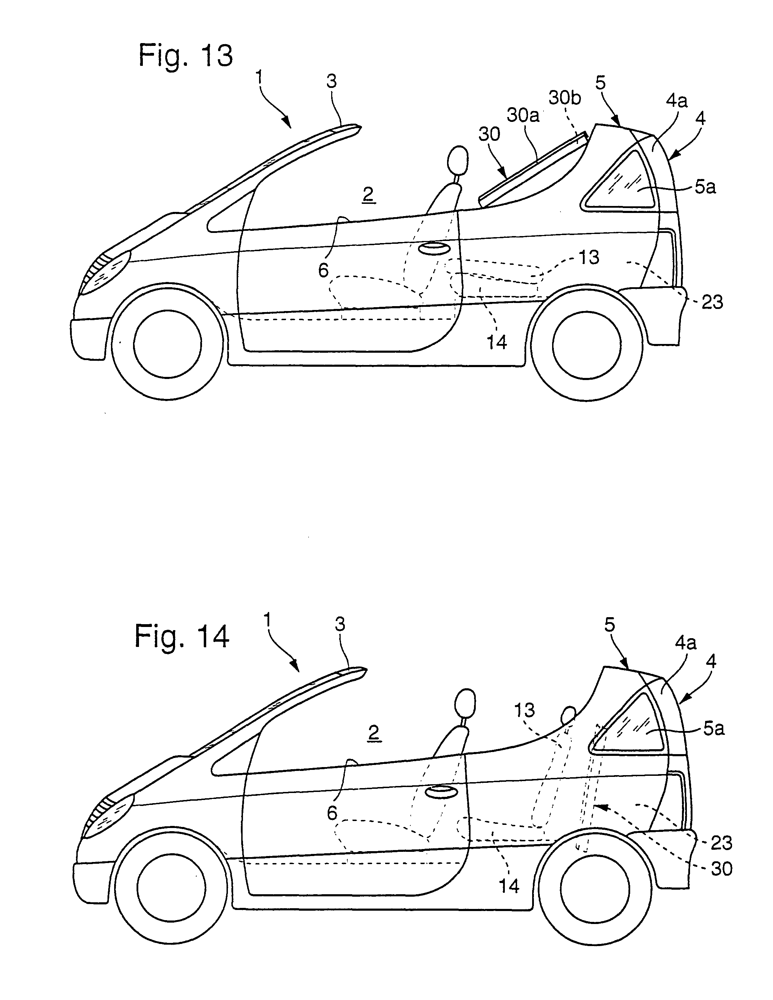

Ein Personenkraftwagen bzw. Cabriolet 1 nach den Fig. 1 bis 4 sowie Fig. 11 bis 14 weist einen Fahrzeuginnenraum 2 auf, der nach vorne durch eine Windschutzscheibe sowie einen oberhalb der Windschutzscheibe verlaufenden Windschutzquerträger 3 begrenzt wird. Der Windschutzquerträger 3 schließt an zwei A-Säulen der Karosserietragstruktur an, welche die Windschutzscheibe zu beiden Seiten flankieren. Nach hinten wird der Fahrzeuginnenraum 2 durch eine Rückwandtür 4 begrenzt, die hier als um eine im Bereich der hinteren Dachkante verlaufende, horizontale Fahrzeugquerachse schwenkbare Heckklappe ausgebildet ist. Die Rückwandtür 4 bildet oberhalb des hinteren Stoßfängers gleichzeitig den rückwärtigen Abschluß der Karosserie, also die Rückwand des Kraftwagens.

Da die Rückwandtür 4 im geschlossenen Zustand steil geneigt ist, weist der Kraftwagen 1 also ein Steilheck auf, wie es von Kraftwagen der Kompaktklasse mit geschlossenem Aufbau an sich bekannt ist. Die Rückwandtür 4 ist mittels üblicher und daher nicht gezeigter Bandscharniere am Mittelstück des die Dachbreite portalartig überspannenden Dachabschnitts 5 gelagert und weist eine großformatige Heckscheibe 4a auf. Somit bildet die U-förmige hintere Stirnseite des Dachabschnitts 5 oberhalb der Bordwandoberkanten 6 den Rahmen für die Rückwandtür 4.

Der Dachabschnitt 5 ist integraler Bestandteil der Karosserie, also in die tragende Karosseriestruktur des Kraftwagens 1 eingebunden. Von der Bordwandoberkante 6 ausgehend erstreckt sich die vordere Stirnseite des Dachabschnitts 5 unter harmonischer Krümmung seiner seitlichen Dachpfosten schräg nach hinten oben bis zur Dachfläche, die sich leicht abfallend nach hinten erstreckt und vom Mittelstück des Dachabschnitts 5 gebildet ist. Um die Transparenz des Dachabschnittes 5 zu verbessern, laufen die seitlichen Dachpfosten auf den oberen Randbereich der Heckscheibe 4a zu und aus den dreiecksförmigen Seitenwandbereichen des Dachabschnitts 5 ist unterhalb der Dachpfosten jeweils eine Öffnung ausgespart und mit einem Dreiecksfensters 5a verglast. Der Dachabschnitt 5 der Fahrzeugkarosserie ist wie übliche Karosseriebereiche aus tiefgezogenem Blechschalen zusammengesetzt, die unlösbar miteinander verschweißt oder durch andere bekannte Fügeverfahren unlösbar miteinander verbunden sind.

In einem Fahrgastraumabschnitt des Fahrzeuginnenraumes 2 erfolgt die seitliche Begrenzung unterhalb der Bordoberkante 6 durch entsprechende Karosserieteile einschließlich entsprechender Seitentüren. Oberhalb der Bordkante 6 wird die Begrenzung durch versenkbare Seitenscheiben erreicht. Diese sind entweder in den Seitentüren oder aber in den an die Seitentüren angrenzenden Bordwänden versenkbar.

Vor dem Dachabschnitt 5 wird der Fahrzeuginnenraum 2 beim Personenkraftwagen 1 gemäß Fig. 1 nach oben durch eine Faltverdeckanordnung 7 begrenzt, die ein nachfolgend näher beschriebenes Verdeckgestell sowie einen das Verdeckgestell überspannenden Verdeckbezug 11 aufweist. Im aufgespannten, also geschlossenen Zustand der Faltverdeckanordnung 7 erstreckt sich das Verdeck zwischen dem Windschutzquerträger 3 und dem Dachabschnitt 5 der Fahrzeugkarosserie und in Breitenrichtung bis zu den Seitenscheiben. Die gesamte Faltverdeckanordnung 7 ist seitlich an den Säulen des Dachabschnitts 5 angelenkt und aufgehängt, wobei die Bewegung der Faltverdeckanordnung 7 zwischen ihrer geschlossenen und ihrer geöffneten Endposition teilweise durch manuelles Verschwenken und teilweise durch Verschwenken über hydraulische Arbeitszylinder erfolgt, wie an späterer Stelle noch näher erläutert werden wird. Bei geschlossenem Dach ist die Faltverdeckanordnung 7 mit ihrem vorderen Abschluß am Windschutzquerträger 3 verriegelt.

Das Verdeckgestell weist stabile Rahmenträgerteile in Form einer Dachkappe 8, zweiteiliger seitlicher Dachrahmen 9, an diese anschließende C-Säulenrahmen 10 und einen U-förmigen Spannbügel 12 auf, welche die seitliche Begrenzung der Faltverdeckanordnung 7 bilden und seitlich an obere Randzonen der Seitenscheiben anschließen. Die Rahmenträgerteile 8, 9, 10 und 12 dienen zur Befestigung des Verdeckbezuges 11 und versteifen die Faltverdeckanordnung 7. Die Dachkappe 8 ist als flachbauendes Querträgerteil ausgebildet, das in der bei geschlossenem Verdeck vorliegenden Überdeckungsstellung durch nicht näher beschriebene vordere Verdeckverschlüsse üblicher Bauart mit dem darunterliegenden Windschutzquerträger 3 zu verriegeln ist.

An den seitlichen Randzonen der Dachkappe 8 sind die vorderen Dachrahmenteile der jeweils zweiteiligen seitlichen Dachrahmen 9 relativunbeweglich befestigt, wobei sie sich im wesentlichen parallel zur Längsmittelebene des Daches nach hinten erstrecken. Die seitlichen Dachrahmen 9 weisen zwischen ihrem vorderen und hinteren Dachrahmenteil -also etwa in der Mitte- ein Scharniergelenk mit horizontaler Schwenkachse auf, wodurch sich die Dachrahmen 9 beim Versenkvorgang in bei Klappverdecken üblicher Art raumsparend zusammenklappen lassen.

An das hintere Ende der Dachrahmen 9 sind mittels jeweils eines Scharnieres die beiden seitlichen C-Säulenrahmen 10 schwenkbar angelenkt. An diese schließen die beiden seitlichen Schenkel des den rückwärtigen Abschluß des Verdecks bildenden Spannbügels 12 unter gelenkiger Verbindung an.

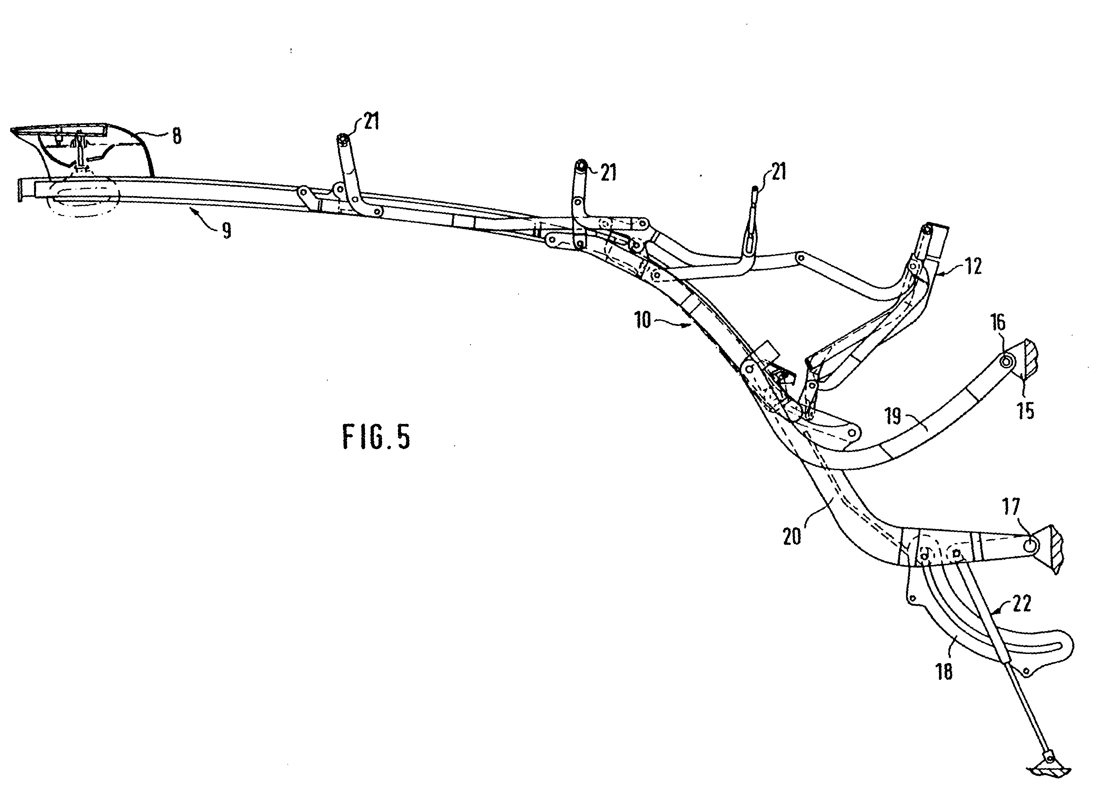

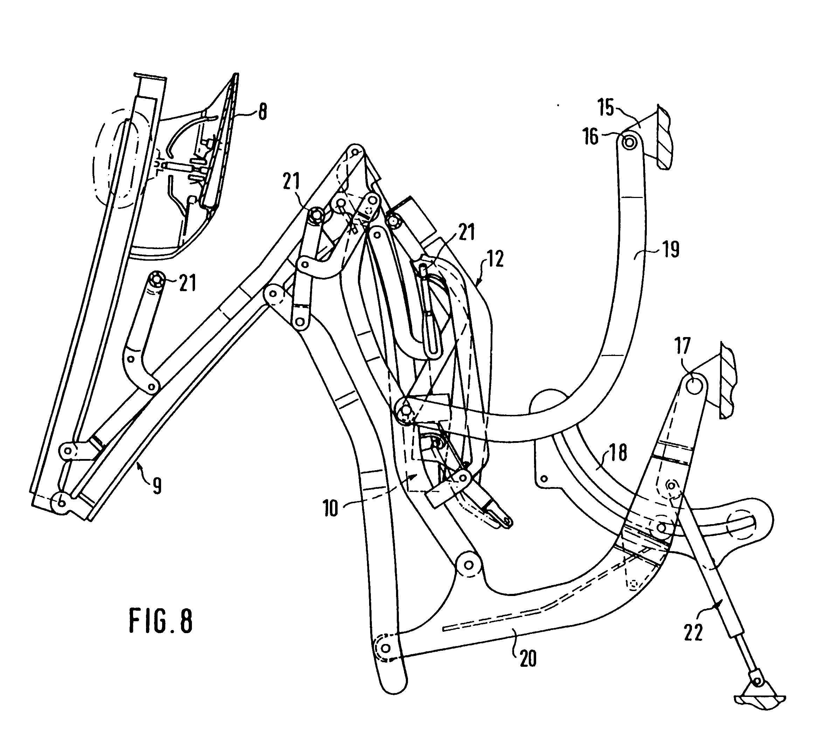

Die Bewegungssteuerung des Verdeckgestells zum Absenken und Aufspannen der Faltverdeckanordnung 7 erfolgt durch aufwendig gestaltete Gelenkmechanismen, die in den Fig.5 bis 10 deutlicher gezeigt und nachfolgend im Hinblick auf für die Erfindung wichtige Gesichtspunkte näher beschrieben werden. Das Verdeckgestell ist im Bereich des Dachabschnittes 5 fahrzeugfest angelenkt. Dazu sind an der Innenseite der einander gegenüberliegenden Dachpfosten des Dachabschnittes 5 zwei Lagerkonsolen 15 befestigt, die eine fahrzeugfeste Gelenkachse 16 für eine entsprechend bogenförmig gekrümmte Führungsstange 19 bilden. Das Verdeckgestell ist außerdem auf jeder Seite des Dachabschnittes 5 mittels eines weiteren, darunter angeordneten Führungshebels 20 fahrzeugfest am Dachabschnitt 5 angelenkt, wozu eine eine Gelenkachse 17 definierende, nicht näher bezeichnete Aufnahme an jeder Innenseite der Seitenwände des Dachabschnittes 5 befestigt ist. Dem fahrzeugfesten Gelenkpunkt 17 ist eine bogenförmige Kulissenführung 18 zugeordnet, die ebenfalls fahrzeugfest am Dachabschnitt 5 gehalten ist und eine kreisbogenförmige Führungsbahn für den Führungshebel 20 bildet. In der Kulissenführung 18 erfolgt aber lediglich eine seitliche Zwischenabstützung des relativ langen Führungshebels 20.

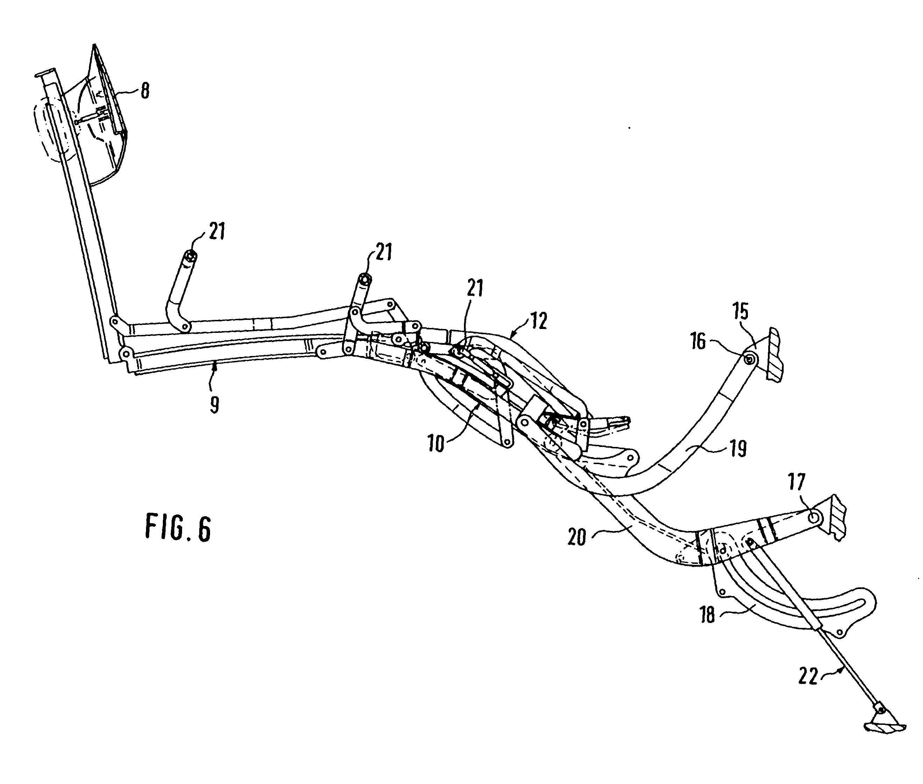

Der Spannbügel 12, der die rückseitige Begrenzung der Faltverdeckanordnung 7 darstellt, schließt im geschlossenen Zustand des Faltverdecks unter Abdichtung an die vordere Stirnseite des Dachabschnittes 5 an. Er ist über seitliche Stangengetriebe, die jeweils ein Kniehebelgestänge umfassen, mit der Dachkappe 8 bewegungsgekoppelt, so daß ein Hochklappen derselben um eine von den Scharniergelenken der seitlichen Dachrahmen 9 definierte Fahrzeugquerachse in eine Fig. 6 entsprechende Zwischenstellung zu einem gegenläufigen Nachvornklappen des Spannbügels 12 führt, bis seine seitlichen Schenkel nahezu parallel hinter dem ihnen zugeordneten C-Säulenrahmen 10 liegen, der seine Position zu diesem Zeitpunkt noch nicht verändert hat. Durch anschließendes Herunterziehen der Dachkappe 8 in die geschlossene Stellung gemäß Fig. 5 würde der Spannbügel 12 in umgekehrter Richtung zwangsbewegt und wieder in seine Anlagestellung an der Vorderseite des Dachabschnitts 5 zurückgeklappt. In dieser ersten Öffnungsbewegungsphase bzw. letzten Schließbewegungsphase ist eine ausschließlich manuelle Betätigung des Verdecks vorgesehen.

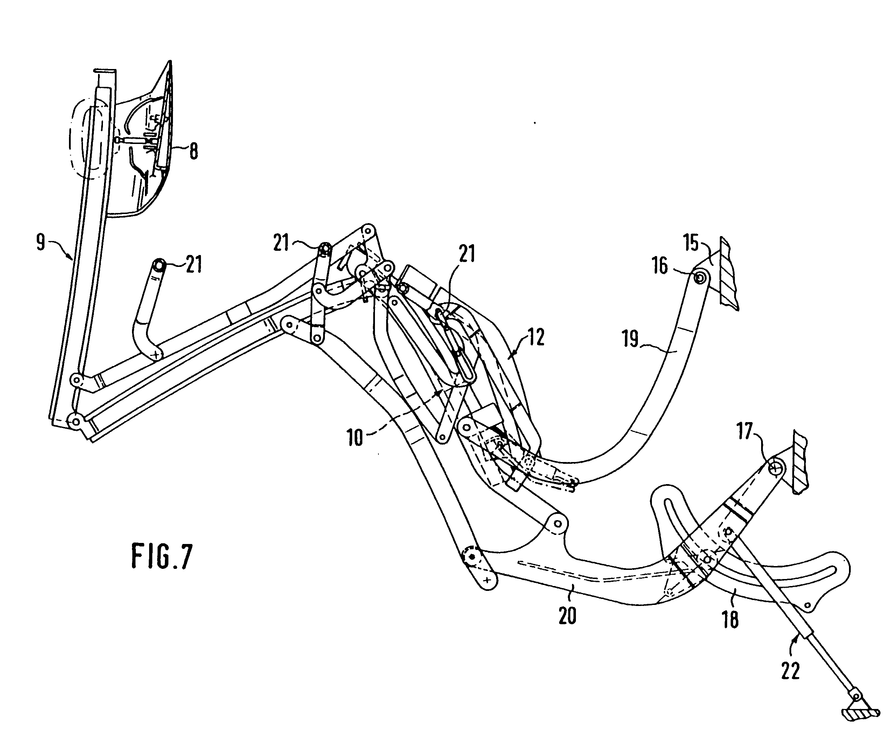

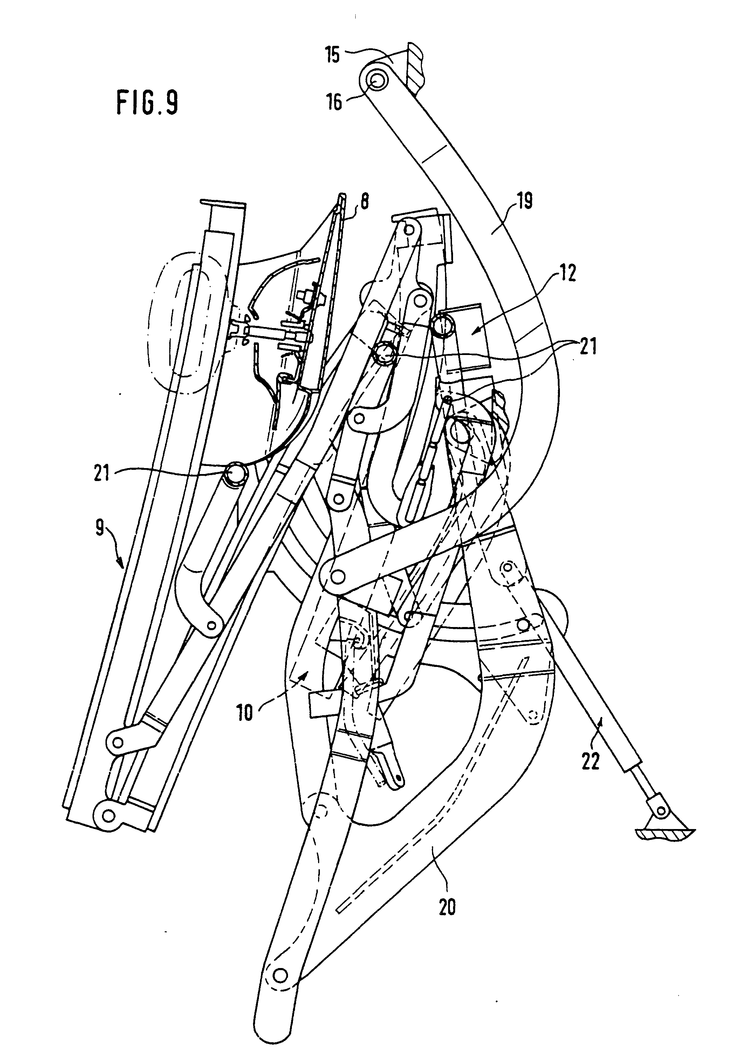

Zwischen dieser Klappstellung und der vollständig zusammengeklappten Ablagestellung gemäß Fig. 9 läßt sich das Verdeck auf Knopfdruck elektrohydraulisch verfahren. Hierzu sind die Führungshebel 20 jeweils mittels eines hydraulischen Arbeitszylinders 22 schwenkangetrieben, dessen oberes Ende an einem Hebelarm des zugeordneten Führungshebels 20 angelenkt ist, während das untere, stangenseitige Ende gelenkig an einem karosseriefesten Lager abgestützt ist. Durch synchrones Beschalten der beiden Arbeitszylinder 22 auf ihrer Stangenseite fahren diese ein und Verschwenken dabei ihren Führungshebel 20 im Uhrzeigergegensinn um die Gelenkachse 17. Aufgrund der gezeigten Kinematik des Verdeckgestells erfolgt hierdurch zwangläufig eine Einklappbewegung des Verdeckgestells, die phasenweise in den Fig. 7 bis 9 gezeigt ist.

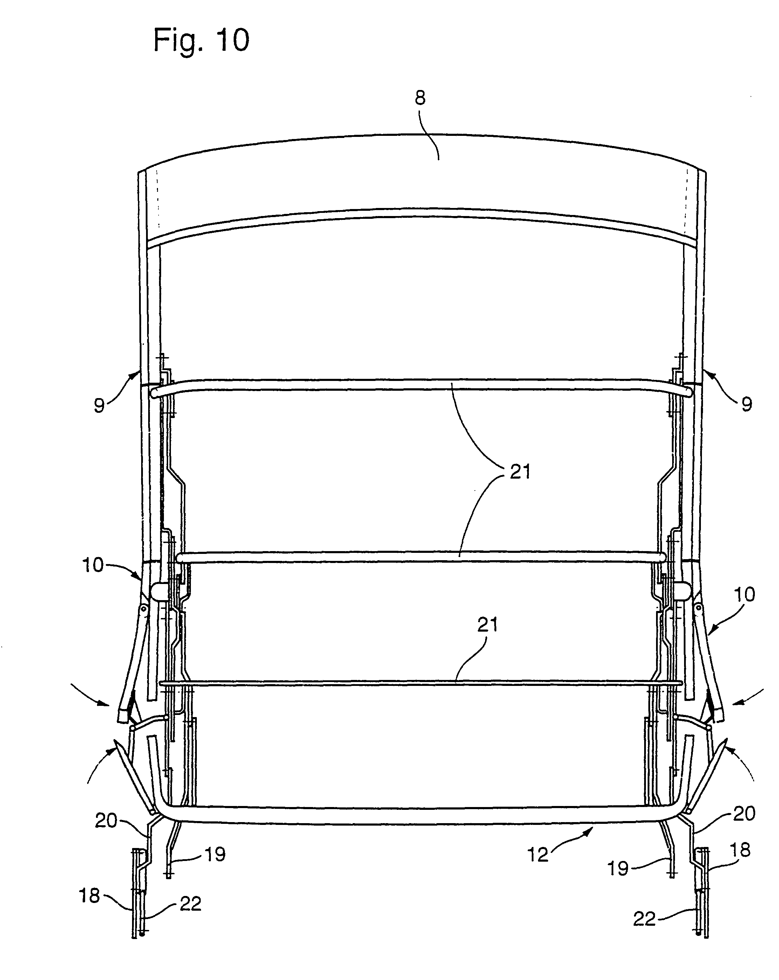

Wie im Zusammenhang mit der Draufsicht nach Fig. 10 deutlicher zu erkennen ist, weist das bezogen auf die Längsmittelebene des Fahrzeugs spiegelsymmetrische Verdeckgestell zudem eine Spriegelanordnung 21 auf, die mehrere die Dachbreite überspannende Spriegel umfaßt. Die einzelnen Spriegel dieser Spriegelanordnung 21, die in üblicher Weise den Verdeckbezug 11 im Mittelbereich stützen sollen, sind mit ihren seitlichen Enden an zugeordneten Hebeln des Gelenkgetriebes abgestützt und werden so zwischen ihrer Stützposition bei geschlossenem Verdeck und ihrer zusammengeklappten Ablagestellung von den sie tragenden Hebeln zwangläufig mitbewegt. Die Einzelheiten der Anbindung sind aus der Zeichnung ersichtlich.

Als Besonderheit der Faltverdeckanordnung 7 ist den seitlichen Schenkeln des Spannbügels 12 einerseits und den beiden C-Säulenrahmen 10 andererseits eine Einzugsanordnung zugeordnet, durch welche die Breite der Faltverdeckanordnung 7 im Eckbereich zwischen den Schenkeln der Spannbügel 12 und dem zugeordneten Säulenrahmen 10 beim Versenkvorgang deutlich reduziert wird. Hierdurch läßt sich das Faltverdeck problemlos zwischen den Pfosten des Dachteils 5 her in seine versenkte Ablagestellung klappen. Um diese Breitenreduzierung zu ermöglichen, wird der Verdeckbezug 11 in diesem Eckbereich von Stoffhalteschienen gehalten, die schwenkbar auf dem zugeordneten seitlichen Schenkel des Spannbügels 12 sowie auf dem zugeordneten C-Säulenrahmen 10 gelagert sind. Diese Stoffhalteschienen werden beim Versenkvorgang , wie in Fig. 10 durch Pfeile angedeutet ist, eingeklappt und reduzieren dabei die Querschnittsbreite des Verdecks. Diese Breitenreduzierung erfolgt vorzugsweise selbsttätig über eine Hilfsmechanik in Abhängigkeit vom Klappwinkel des Verdecks. Die Breitenreduzierung des Verdecks mit klappwinkelabhängiger Steuerung ist als solches -z. B. aus der DE 37 24 532 C1- bekannt und daher nicht näher beschrieben.

Durch Beschalten der Arbeitszylinder 22 auf der Vollkolbenseite wird deren Kolbenstange wieder ausgefahren und die Verdeckanordnung wird aus ihrer Ablagestellung gemäß Fig. 9 wieder in ihre Zwischenstellung gemäß Fig. 6 aufgeklappt, wonach das Verdeck durch manuelle Betätigung vollständig geschlossen werden kann. Auch die Breitenreduzierung des Verdecks wird beim Schließen desselben automatisch rückgängig gemacht.

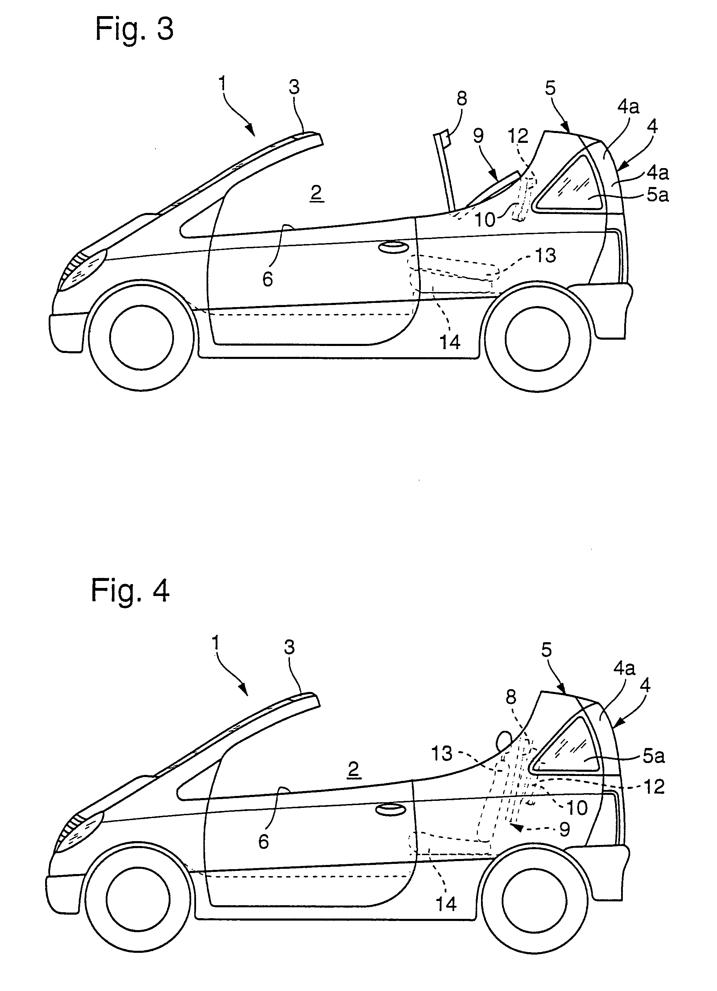

Wie in Fig. 4 erkennbar ist, wird die Faltverdeckanordnung 7 in ihrer zusammengelegten, geöffneten Endposition in Steillage hinter einer Fondsitzbank gehalten, die in üblicher Weise ein Sitzlehnenteil 13 und ein Sitzkissenteil 14 umfaßt, wobei sich das Verdeck annähernd parallel zur Neigung des in seiner Gebrauchsstellung gehaltenen Sitzlehnenteils 13 erstreckt. Um den für den Versenkvorgang des Verdeckes notwendigen Schwenkbewegungsraum zu schaffen, läßt sich das Sitzlehnenteil 13, wie in Fig. 2 und 3 zu sehen ist, auf das in seiner Gebrauchsstellung verbleibende Sitzkissenteil 14 herunterklappen. Nach Vorbeischwenken des Faltverdecks kann das Sitzlehnenteil 13 wieder in seine Gebrauchsstellung hochgeklappt werden, wonach das Verdeck weitestgehend verborgen in einer vorderen Querebene des Kofferraums 23 liegt. Dadurch verbleibt hinter dem abgelegten Verdeck 7 ein erheblicher Abstand zur als Heckklappe ausgebildeten Rückwandtür 4 und damit ein Kofferraum 23 mit in der Kompaktklasse üblichem Volumen. Bei geschlossenem Faltverdeck 7 ist der Kofferraum 23 demnach um den vorher vom Verdeck beanspruchten Stauraum vergrößert.

Der Kofferraum 23 kann vorteilhaft mit einer etwa auf Höhe der Bordwandoberkante 6 anzuordnenden Laderaumabdeckung versehen sein, die sich zum Transport großer Transportgüter öffnen läßt, um das Ladevolumen bis unter die Dachfläche des Dachabschnitts 5 vergrößern zu können.

Da sich die Faltverdeckanordnung 7 in ihrer abgesenkten Ablagestellung in Fahrzeuglängsrichtung gesehen in der Flucht bzw. auf Höhe des hochgestellten Sitzlehnenteils 13 befindet, wird das Sichtfeld nach hinten durch die abgesenkte Faltverdeckanordnung 7 nicht oder nur unwesentlich beeinträchtigt.

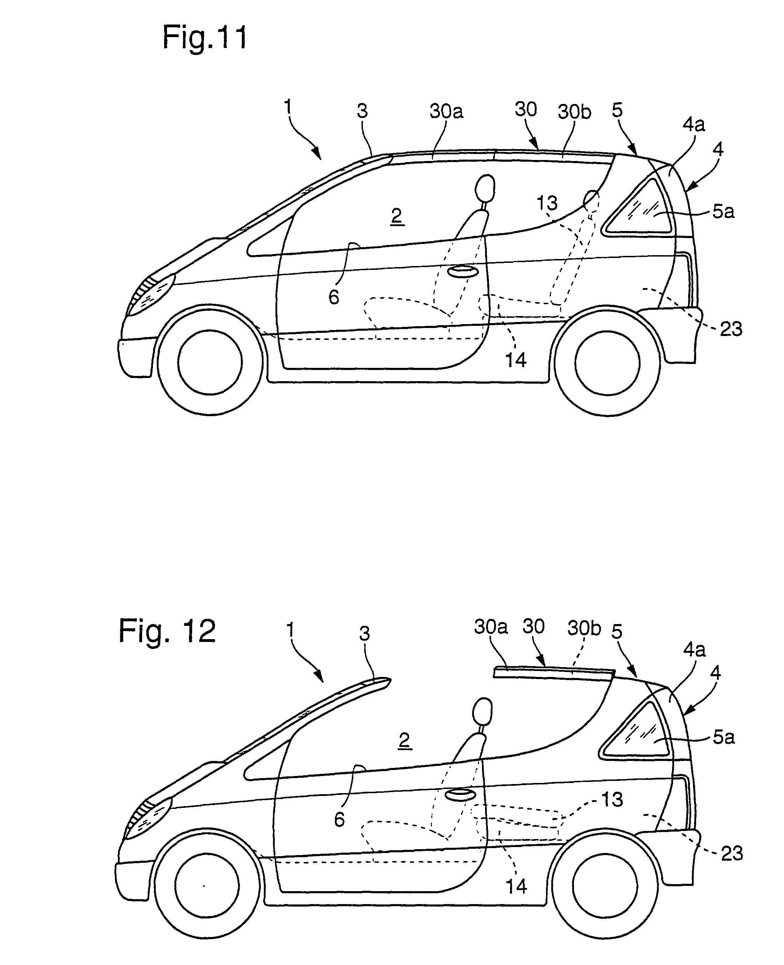

Wie in den Fig. 11 bis 14 gezeigt ist, kann unter Beibehaltung der Karosseriebasis des Kraftwagens 1 in weiterer Ausgestaltung der Erfindung anstelle eines Faltverdecks auch ein Schiebeverdeck 30 vorgesehen werden, das ähnlich kompakt zuammenlegbar ist. Bei diesem Schiebeverdeck 30 handelt es sich um ein zweiteiliges Festdach aus zwei Dachschalen 30a und 30b etwa gleicher Länge. Im geschlossenen Zustand des Schiebeverdecks 30 ist die vordere Dachschale 30a an ihrer vorderen Stirnseite über bekannte Hakenverschlüsse mit dem davorliegenden Windschutzquerträger 3 verriegelt und wird an ihrer hinteren Seite über nicht gezeigte Schiebeführungsmittel von der daran anschließenden Dachschale 30b gehalten. Die hintere Dachschale 30b überbrückt den Abstand zur vorderen Stirnseite des Dachabschnitts 5 im Bereich der Dachfläche, wobei zwischen den einander gegenüberliegenden Stirnseiten von Dachschale 30b und Dachabschnitt 5 eine nicht gezeigte Dichtungsanordnung vorgesehen ist.

Die Schiebeführungen zwischen vorderer und hinterer Dachschale ermöglichen, daß die vordere Dachschale 30a nach dem Entriegeln der vorderen Verdeckverschlüsse unter Führung entlang der hinteren Dachschale 30b nach hinten verschoben werden kann, bis die in Fig. 12 sichtbare Überdeckungsstellung erreicht ist.

Damit die übereinandergeschobenen Dachschalen 30a und 30b aus dieser Zwischenstellung problemlos in die vordere Querebene des Kofferraums 23 verlagert werden können, ist die hintere Dachschale 30b durch nicht gezeigte, nach hinten auskragende Hebelarme an der Innenseite der Dachpfosten des Dachabschnitts 5 um eine horizontale Fahrzeugquerachse schwenkbar gelagert. Diese Schwenklagerung muß jedoch zunächst arretiert sein, damit die übereinandergeschobenen Dachschalen 30a und 30b nicht bereits beim Rückverschieben der Dachschale 30a unkontrolliert nach unten klappen können. Bevor das Schiebeverdeck 30 in den Kofferraum 23 heruntergeklappt werden kann, muß analog zum vorher beschriebenen Faltverdeck das Sitzlehnenteil 13 nach vorn geklappt werden, um den nötigen Schwenkbewegungsraum zu schaffen.

Danach kann die Arretierung des Schiebeverdecks 30 aufgehoben und dasselbe in die vordere Querebene des Kofferraums 23 herunterbewegt werden, bevor das Sitzlehnenteil 13 wieder in seine Gebrauchsstellung zurückgeklappt werden kann. Zusätzlich kann es im Interesse einer guten Sicht nach hinten durch den Dachabschnitt 5 geboten sein, das Schiebeverdeck 30 insgesamt auch absenkbar auszubilden. Hierzu könnte das Schiebeverdeck 30 z. B. mit einer Drehschiebeanlenkung an den Dachpfosten des Dachabschnitts 5 aufgehängt sein. Eine Kombination von Schwenk- und Absenkbewegung des Schiebeverdecks 30 ließe sich z. B. auf einfache Weise durch Anlenkung des Schiebeverdecks 30 mittels bekannter Mehrgelenkscharniere erzielen.

In der abgesenkten Ruheposition benötigt das Hardtop lediglich einen geringen Stauraum, so daß bei versenktem Schiebeverdeck 30 ein gegenüber der Faltverdeckversion geringfügig größerer Kofferraum 23 im Heckbereich des Personenkraftwagens 1 bestehen bleibt, der durch Öffnen der als Heckklappe ausgebildeten Rückwandtür 4 von hinten zugänglich ist. Es versteht sich, daß der Bewegungsablauf beim Schließvorgang des Schiebeverdeck 30 umgekehrt werden muß.

Das beschriebene Fahrzeugkonzept zeichnet sich unabhängig davon, ob das Faltverdeck 7 oder das Schiebeverdeck 30 verwendet wird, dadurch aus, daß im Personenkraftwagen 1 die Vorzüge eines Cabriolets mit den Vorzügen eines Steilheckkraftwagens mit vielseitig variablem Innenraum vereinigt sind.

## Patentansprüche

1. Kraftwagen mit einem zu öffnenden Verdeck, das im geschlossenen Zustand den Innenraum (2) des Kraftwagens zwischen vorderer Windschutzscheibe und einem hinteren, mit seitlichen Säulen einen Überrollbügel bildenden Dachabschnitt (5) überdeckt, und im geöffneten Zustand nach Verkürzung seiner Länge in einen Stauraum der Karosserie abgesenkt ist, wobei der Kraftwagen einen oberhalb der Bordwandoberkante (6) geschlossenen, unbeweglichen Dachbereich aufweist (5), durch den der Innenraum (2) des Kraftwagens bei geöffnetem Verdeck (7;30) weitgehend gegen Rückströmungen des Fahrtwindes abgeschirmt ist,
**dadurch gekennzeichnet,**
**daß** der Kraftwagen (1) am rückwärtigen Abschluß der Karosserie eine steile Rückwand aufweist, die ein Steilheck ausbildend oberhalb der Bordwandoberkante (6) an den als Überrollbügel dienenden Dachabschnitt (5) angrenzt, **daß** der das Verdeck (7;30) zumindest überwiegend aufnehmende Stauraum in einer steil geneigten Fahrzeugquerebene der Karosserie hinter dem Fahrgastabschnitt des Innenraums (2) und in einem Abstand vor der Rückwand angeordnet ist, und **daß** als Rückwand eine Rückwandtür (4) vorgesehen ist, deren Öffnungsrahmen oberhalb der Bordwandoberkanten (6) vom Dachabschnitt (5) gebildet ist.

2. Kraftwagen nach Anspruch 1,
**dadurch gekennzeichnet,**
**daß** die Rückwand des Kraftwagens (1) von einer Rückwandtür (4) mit integrierter Heckscheibe (4a) gebildet ist.

3. Kraftwagen nach Anspruch 1,
**dadurch gekennzeichnet,**
**daß** der Stauraum hinter dem Sitzlehnenteil (13) einer Rücksitzbank des Kraftwagens (1) angeordnet ist, wobei das Sitzlehnenteil (13) in eine den Bewegungsraum des Verdeckes (7;30) freigebende Ausweichstellung zu verlagern ist.

4. Kraftwagen nach Anspruch 1,
**dadurch gekennzeichnet,**
**daß** der den Überrollbügel bildende Dachabschnitt (5) als integraler Bestandteil der Karosserie des Kraftwagens (1) ausgebildet ist, wobei die vordere Stirnseite des Dachabschnitts (5) schräg nach hinten geneigt ist.

5. Kraftwagen nach Anspruch 1,
**dadurch gekennzeichnet,**
**daß** die Seitenwandbereiche des Dachabschnittes (5) jeweils einen Dachpfosten aufweisen, der sich schräg nach hinten oben erstreckt, wobei die Seitenwandbereiche unterhalb ihres Dachpfostens mit einem Dreiecksfenster (5a) versehen sind.

6. Kraftwagen nach Anspruch 1,
**dadurch gekennzeichnet,**
**daß** das Verdeck (7;30) durch an den Seitenwandbereichen des Dachabschnitts (5) gehaltene Führungsmittel klapp- und absenkbeweglich gelagert ist.

7. Kraftwagen nach Anspruch 6,
**dadurch gekennzeichnet,**
**daß** das Verdeck als Schiebeverdeck (30) mit zwei festen Dachschalen ausgebildet ist, wobei die vordere Dachschale (30a) in eine Überdeckungsstellung zur hinteren Dachschale (30b) zu verschieben ist und durch eine Drehschiebeanlenkung der hinteren Dachschale (30b) an den Seitenwandbereichen des Dachabschnittes (5) mit dieser gemeinsam klapp- und absenkgeführt ist.

8. Kraftwagen nach Anspruch 6,
**dadurch gekennzeichnet,**
**daß** das Verdeck als Faltverdeck (7) mit einem über ein tragendes Verdeckgestell aufzuspannenden Verdeckbezug (11) ausgebildet ist, wobei das mehrgliedrige Verdeckgestell kompakt zusammenzuklappen ist.

9. Kraftwagen nach Anspruch 8,
**dadurch gekennzeichnet**
**daß** das Faltverdeck (7) am rückwärtigen Abschluß einen etwa U-förmigen Spannbügel (12) aufweist, der bei geschlossenem Faltverdeck (7) unter Abdichtung mit dem portalartigen Dachabschnitt (5) zusammenwirkt.

10. Kraftwagen nach Anspruch 9,
**dadurch gekennzeichnet**
**daß** der Spannbügel (12) bei geschlossenem Faltverdeck (7) mit seiner rückwärtigen Stirnseite gegenüber der vorderen Stirnseite des Dachabschnitts (5) abgedichtet ist.

11. Kraftwagen nach Anspruch 10,
**dadurch gekennzeichnet,**
**daß** die Querschnittsbreite des Faltverdecks (7) zumindest im unteren Endbereich der seitlichen Schenkel des Spannbügels (12) für den Versenkvorgang zu verringern ist.

12. Kraftwagen nach Anspruch 8,
**dadurch gekennzeichnet,**
**daß** das Verdeckgestell des Faltverdecks (7) entlang den seitlichen Abschlußkanten seitliche Dachrahmen (9) sowie daran anschließende C-Säulenrahmen (10) aufweist.

13. Kraftwagen nach Anspruch 12,
**dadurch gekennzeichnet,**
**daß** die über eine den vorderen Abschluß des Faltverdecks (7) bildende Dachkappe (8) miteinander verbundenen vorderen Rahmenteile der zweiteiligen seitlichen Dachrahmen (9) nach dem Entriegeln der Dachkappe (8) relativ zu den hinteren Rahmenteilen der seitlichen Dachrahmen (9) in eine Zwischenstellung hochzuklappen sind.

14. Kraftwagen nach Anspruch 13,
**dadurch gekennzeichnet,**
**daß** die vorderen Rahmenteile der seitlichen Dachrahmen (9) derart mit den seitlichen Schenkeln des Spannbügels (12) bewegungsgekoppelt sind, **daß** der Spannbügel (12) durch die Hochklappbewegung der vorderen Rahmenteile gegenläufig zu diesen mithochgeklappt ist.

15. Kraftwagen nach Anspruch 13,
**dadurch gekennzeichnet,**
**daß** das Verdeckgestell des Faltverdecks (7) bei hochgeklappten vorderen Rahmenteilen und hochgeklapptem Spannbügel (12) unter kinematischem Zwanglauf in seine kompakt zusammengeklappte Endlage zu überführen ist.

16. Kraftwagen nach Anspruch 15,
**dadurch gekennzeichnet,**
**daß** das Faltverdeck (7) in seiner kinematisch zwangläufigen Klappbewegungsphase mittels doppeltwirkender Arbeitszylinder (22) anzutreiben ist.

## Claims

1. A motor vehicle with an opening top which in the closed position covers the interior (2) of the motor vehicle between the front windscreen and a rear roof section (5) which together with lateral pillars forms a roll bar, and in the open position is lowered into a stowage space in the body shell once it has been reduced in length, with the motor vehicle having a closed, fixed roof area above the upper edge of the side wall which shields the interior (2) of the motor vehicle against backward flowing wind blast when the top is open (7; 30),
**characterised in that**
at the rear end of the body shell the motor vehicle (1) has a rigid rear wall which lies adjacent to the roof section (5) serving as a roll bar above the upper edge (6) of the side wall forming a hatchback, that the stowage space which receives at least most of the top (7; 30) is positioned in a rigidly angled transverse plane in relation to the body shell of the motor vehicle behind the passenger section of the interior (2) and at a distance from the rear wall, that a rear wall door (4) is provided as the rear wall and that the opening frame above the side wall upper edge (6) of the rear wall door is formed by the roof section (5).

2. A motor vehicle in accordance with claim 1,
**characterised in that**
the rear wall of the motor vehicle (1) is formed by a rear wall door (4) with integrated rear window (4a).

3. A motor vehicle in accordance with claim 1,
**characterised in that**
the stowage space is located behind the seat back part (13) of a rear seat bench of the motor vehicle (1), it being necessary to move the seat back part (13) into an alternative position in order to open up the space required to move the top (7; 30).

4. A motor vehicle in accordance with claim 1,
**characterised in that**
the roof section (5) forming the roll bar is designed as an integral part of the body shell of the motor vehicle (1) with the front end of the roof section (5) being angled diagonally rearwards.

5. A motor vehicle in accordance with claim 1,
**characterised in that**
each of the side wall areas of the roof section (5) has a roof post which extends diagonally rearwards and upwards, the side wall areas below their roof posts being provided with a quarter window (5a).

6. A motor vehicle in accordance with claim 1,
**characterised in that**
the top (7; 30) is joined by guide means fixed to the side wall areas of the roof section (5) in such a way that it can be folded and lowered.

7. A motor vehicle in accordance with claim 6,
**characterised in that**
the top is designed as a sliding top (30) with two fixed roof shells, it being necessary to slide the front roof shell (30a) into a covering position over the rear roof shell (30b) before it is then folded and lowered together with the rear roof shell (30b) against the side wall areas of the roof section (5) by means of a rotary slide guide device.

8. A motor vehicle in accordance with claim 6,
**characterised in that**
the top is designed as a folding top (7) with a top cover (11) which is stretched over a load-bearing top frame with the multi-membered top frame being folded compactly down.

9. A motor vehicle in accordance with claim 8,
**characterised in that**
the rear end of the folding top (7) has an approximately U-shaped tension bar (12) which co-operates with the portal-like roof section (5) to form a seal when the folding top (7) is closed.

10. A motor vehicle in accordance with claim 9,
**characterised in that**
when the folding top (7) is closed the rear end of the tension bar (12) is sealed against the front end of the roof section (5).

11. A motor vehicle in accordance with claim 10,
**characterised in that**
the width of the cross section of the folding top (7) has to be reduced, in the lower end area of the lateral leg of the tension bar (12) at least, for the lowering procedure.

12. A motor vehicle in accordance with claim 8,
**characterised in that**
the top frame of the folding top (7) has lateral roof frames (9) along the lateral edges to which are connected C-pillar frames (10).

13. A motor vehicle in accordance with claim 12,
**characterised in that**
the front frame parts of the two-part lateral roof frame (9) which are connected together by means of a header bow (8) forming the front end of the folding top (7) have to be folded up into an intermediate position in relation to the rear frame parts of the lateral roof frame (9) once the header bow (8) has been unlocked.

14. A motor vehicle in accordance with claim 13,
**characterised in that**
the front frame parts of the lateral roof frame (9) are articulated with the lateral legs of the tension bar (12) in such a manner that the folding up movement of the front frame parts folds the tension bar (12) up with it in the opposite direction.

15. A motor vehicle in accordance with claim 13,
**characterised in that**
when the front frame parts and the tension bar (12) are folded up, the top frame of the folding top (7) has to be moved into its compactly folded end position by means of a controlled kinematic movement.

16. A motor vehicle in accordance with claim 15,
**characterised in that**
in its kinematically controlled folding movement phase the folding top (7) is driven by means of dual-action working cylinders (22).

## Revendications

1. Véhicule automobile muni d'une capote ouvrante qui, à l'état fermé, recouvre l'espace intérieur (2) du véhicule automobile entre le pare-brise avant et un tronçon de toit (5) arrière formant, entre les colonnes latérales un arceau de sécurité, et à l'état ouvert, après raccourcissement de sa longueur, est abaissée dans un compartiment de logement de la carrosserie, le véhicule automobile présentant une zone de toit non mobile, fermée, située au-dessus de l'arête supérieure de la paroi de bord (6), zone de toit au moyen de laquelle l'espace intérieur (2) du véhicule automobile est notablement protégé contre les retours d'écoulement du vent de roulage, lorsque la capote (7) est ouverte,
**caractérisé en ce que**
le véhicule automobile (1) présente, à la limite arrière de la carrosserie, une paroi arrière à inclinaison fortement tombante, qui délimite un tronçon de toit (5), constituant une queue tombant au-dessus de l'arête supérieure de paroi de bord (6), sur le tronçon de toit (5) servant d'arceau de sécurité, **en ce que** le compartiment de rangement recevant au moins principalement la capote (7; 30) est disposé dans un plan transversal, tombant fortement, du véhicule automobile, de la carrosserie, à l'arrière du tronçon réservé aux passagers de l'habitacle (2) et à distance de la paroi arrière, et **en ce que**, comme paroi arrière, est prévue une porte de paroi arrière (4), dont le cadre d'ouverture est formé au-dessus des arêtes supérieures de paroi de bord (6), par le tronçon de toit (5).

2. Véhicule automobile selon la revendication 1, **caractérisé en ce que** la paroi arrière du véhicule automobile (1) est formée par une porte de paroi arrière (4) à lunette arrière (4a) intégrée.

3. Véhicule automobile selon la revendication 1, **caractérisé en ce que** le compartiment de rangement est disposé derrière une partie formant dossier (13) d'une banquette arrière du véhicule automobile (1), la partie formant dossier (13) devant être déplacée en une position d'échappement, libérant l'espace de mobilité de la capote (7; 30).

4. Véhicule automobile selon la revendication 1, **caractérisé en ce que** le tronçon de toit (5) formant l'arceau de sécurité est réalisé sous la forme de constituant solidaire de la carrosserie du véhicule automobile (1), la face frontale avant du tronçon de toit (5) étant inclinée obliquement vers l'arrière.

5. Véhicule automobile selon la revendication 1, **caractérisé en ce que** les zones de paroi latérales du tronçon de toit (5) présentent chacune un montant de toit qui s'étend obliquement vers l'arrière en partie haute, les zones de paroi latérales étant munies au-dessous, de leur montant de toit, d'une fenêtre triangulaire (5a).

6. véhicule automobile selon la revendication 1, **caractérisé en ce que** la capote (7; 30) est montée avec une mobilité en basculement et en abaissement, obtenue à l'aide de moyens de guidage fixés sur les zones de paroi latérales du tronçon de toit (5).

7. Véhicule automobile selon la revendication 4, **caractérisé en ce que** la capote est réalisée sous la forme de toit coulissant (30) muni de deux coques de toit rigides, la coque de toit avant (30a) se déplaçant dans une position de recouvrement par rapport à la coque de toit arrière (30b), et étant guidée en basculement et en abaissement, avec celle-ci, par une articulation à coulissement et à rotation de la coque de toit arrière (30b) sur les zones de paroi latérales du tronçon de toit (5).

8. Véhicule automobile selon la revendication 6, **caractérisé en ce que** la capote est réalisée sous la forme de capote pliante (7) avec un revêtement de capote (11) à tendre sur un châssis-cage de capote porteur, le châssis-cage, réalisé en plusieurs éléments, pouvant être regroupé par rabattement, de façon compacte.

9. Véhicule automobile selon la revendication 8, **caractérisé en ce que** la capote pliante (7) présente à la limite arrière un arceau tendeur (12) à peu près en forme de U qui, lorsque la capote pliante (7) est fermée, coopère, avec effet d'étanchéité, avec le tronçon de toit (7) du genre d'un portique.

10. Véhicule automobile selon la revendication 9, **caractérisé en ce que** l'arceau tendeur (12), lorsque la capote pliante (7) est fermée, est isolé de façon étanche par sa face frontale arrière par rapport à la face frontale avant du toit (5).

11. Véhicule automobile selon la revendication 10, **caractérisé en ce que** la largeur de la section transversale de la capote pliante (7) est diminuée, au moins dans la zone d'extrémité inférieure des branches latérales de l'arceau tendeur (12), pour permettre de procéder à l'escamotage.

12. Véhicule automobile selon la revendication 8, **caractérisé en ce que** le châssis-cage de capote pliante (7) présente, le long des arêtes de limite latérales, des cadres de toit (8) latéraux, ainsi que des cadres de colonne C (10) s'y raccordant.

13. Véhicule automobile selon la revendication 12, **caractérisé en ce que** les parties de cadre avant, reliées ensemble par l'intermédiaire d'un capuchon de toit (8) formant la limite avant de la capote pliante (7), parties de cadre appartenant aux cadres de toit latéraux (9) réalisés en deux parties, se relèvent par basculement en une position intermédiaire, après avoir déverrouillé le capuchon de toit (8) par rapport aux parties de cadre arrière des cadres de toit latéraux (9).

14. Véhicule automobile selon la revendication 13, **caractérisé en ce que** les parties de cadre avant des cadres de toit latéraux (9) sont accouplées cinématiquement aux branches latérales de l'arceau tendeur (12), de manière que l'arceau tendeur (12) soit relevé conjointement par basculement, par un mouvement de basculement de relevage des parties de cadre avant, en un sens opposé à ceux-ci.

15. Véhicule automobile selon la revendication 13, **caractérisé en ce que** le châssis-cage de capote pliante (3), lorsque les parties de cadre avant sont relevées par basculement et que l'arceau tendeur (12) est relevé par basculement, est passé en une position finale rassemblée par rabattement, compacte, ceci se faisant par un processus cinématique forcé.

16. Véhicule automobile selon la revendication 15, **caractérisé en ce que** la capote pliante (7) doit être entraînée, à sa phase de mouvement basculant cinématiquement forcée, par utilisation de vérins (22) à double effet.
